# EUROPEAN PATENT SPECIFICATION

(11) **EP 0 875 587 B1**
(45) Date of publication and mention of the grant of the patent: **31.01.2001**
(21) Application number: 98303357.2
(22) Date of filing: 29.04.1998
(51) Int. Cl.: C22B 1/16, C22B 1/20, B01D 53/70

(54) **Iron or sintering process with reduced emissions of toxic gases**
Eisenerzsinterprozess mit verringerten Emissionen schädlicher Gase
Agglomération des minerais de fer avec émissions réduites de gaz toxiques

(30) Priority: 30.04.1997 GB 9708652; 12.08.1997 GB 9716925
(43) Date of publication of application: 04.11.1998
(73) Proprietor: Corus UK Limited, London W1V 2BS (GB)
(72) Inventor: Richards, David Charles, Langland, Swansea, SA3 4PC (GB); Edmundson, James Thomas, Ynysmeudw, Pontardawe, SA8 8QN (GB)
(74) Representative: Fry, Alan Valentine

(56) References cited:
- EP-A- 0 526 446
- EP-A- 0 614 993
- BE-A- 1 008 097
- GB-A- 2 155 457
- US-A- 5 113 772
- GEBERT W. ET AL.: "PCDD/F emission reduction for sinter plants" STEEL TIMES, vol. 223, no. 6, June 1995, REDHILL, GB, pages 220-222, XP000510825

## Description

This invention relates to the suppression of toxic byproducts which are generated during sintering of iron ore. In particular, the invention concerns a method of and apparatus for suppressing the synthesis of chloro-organic pollutants, especially dioxins and furans, and the release of acidic gases during sintering.

The conversion of iron ore into for example iron rich pellets, for subsequent reduction in blast furnaces is a process known as sintering. The sinter process comprises heating a layer of iron ore until partial melting occurs to cause individual iron particles to become fused together. The heat necessary to achieve this is provided by forced combustion of fine coke (known as coke breeze) which is mixed *inter alia* with the iron ore to be reduced and fluxes prior to delivery to a sinter plant. The process is continuous; a travelling grate transports the sinter mix as a bed to an ignition hood which ignites the coke in the upper surface of the sinter bed. Thereafter, the combustion of the coke lower down in the mix is maintained by air flowing through the bed. The air flow may be generated by a suction fan.

In a conventional sinter strand, the air used to maintain combustion leaves the strand through one or more stacks as waste gases. These gases contain noxious emissions including *inter alia* polychlorinated dioxins and furans, oxides of nitrogen and other acidic compounds such as hydrogen chloride and sulphur dioxide.

Dioxins and furans present two of the most potentially harmful combustion by-products of the sinter process. Dioxins and furans are a family of chlorinated organic compounds having a general formula **(A)** and **(B)** respectively:

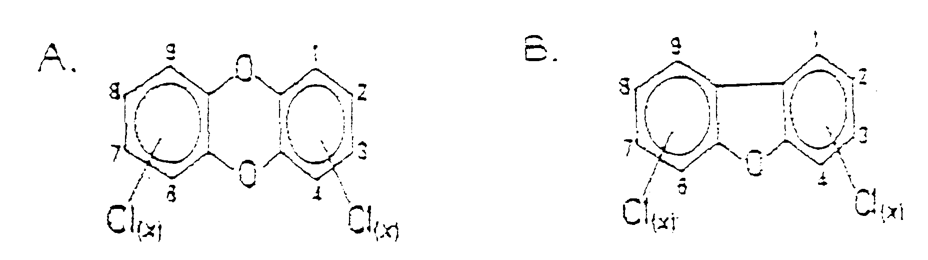

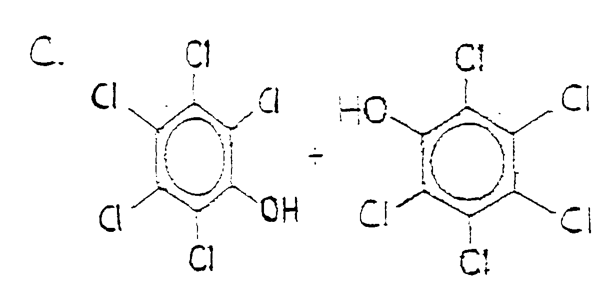

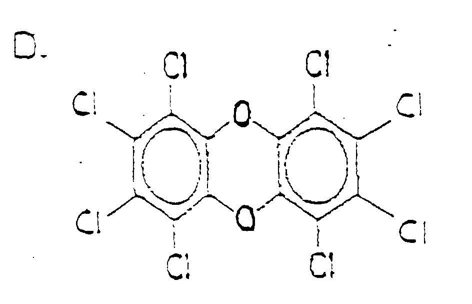

The degree of toxicity varies and depends on the number and position of chloride substitutions on the aromatic carbon ring.
There is evidence to suggest that dioxin and furan precursors are formed from the pyrolysis and chlorination of the organic material that represents the more primary combustion products such as hydrogen chloride, carbon monoxide, water, hydrogen, ethylene and acetylene. Dioxins and furans are thus synthesised *de novo* as a result of thermal reactions between precursor compounds. For example, the precursor pentachlorophenol **(C)** can interact to produce the dioxin octachlorodioxin **(D)**. After formation, some of the dioxins and furans may recombine downstream to produce a different set of compounds which may have higher or lower toxicity. Some of the non-toxic isomers may be converted to toxic isomers and vice versa.

It is also claimed that the 'fingerprint' of toxic isomers is specific to their formation mechanism; for example in combustion processes, furans are synthesised to a greater extent than dioxins and the pentachlorinated furan is the major contributor to total toxicity.

The increasing awareness of the long term deleterious effects on the environment by the release of such toxic compounds into the atmosphere, has generated a need to produce a relatively cheap and effective mechanism of decreasing the chloro-organic and acidic compounds released as gaseous by-products of combustible processes.

In the past, much effort has been directed towards reducing the toxic organic gases released in stack emissions from incineration of municipal waste materials. The most frequently applied control technology involves the use of a spray dryer absorber followed by a particulate matter control device, most commonly a fabric or activated carbon filter. This technology controls the emission of acidic gases such as hydrogen chloride by providing a neutralising reaction with calcium carbonate (lime). The resulting solid materials (e.g.CaCl₂) are captured downstream of the lime injection site. Dioxin and furan gases are assumed to be captured by surface absorption by the filter deposit. Although this method reduces gaseous toxic emissions from incinerator plants to a limited extent, it is capital intensive and procedurally complex. In addition, it significantly increases the mass of solid waste to be disposed of and introduces the problem of toxic chloro-organic solid waste disposal.

Another method used in municipal waste disposal is exemplified in EP-A-371945. This document discloses a method for extracting dioxins from a gas which comprises contacting the gas with a liquid aerosol over a predetermined period of time. The particles present in the aerosol are electrically charged and subsequently separated from the gas with the aid of a wet electrostatic precipitator or electric field.

Ammonia gas or ammonia releasing compounds such as alkanolamines, have demonstrated a potential to control simultaneously emissions of several pollutants of concern, such as dioxins, hydrogen chloride, sulphur dioxide and oxides of nitrogen.

There are several theories which explain how ammonia may act to reduce the formation of toxic byproducts in combustion processes. At high temperatures amines dissociate into NH₂ radicals and subsequently into NH₄⁺ ions. At the proper temperature, ammonia also forms the same radicals and ionic species. Firstly, it is believed that these reactive species can slow down or inhibit the catalytic formation of dioxins by poisoning the catalysts which promote dioxin formation. Secondly, ammonia competes with hydrocarbon precursors to react with available chloride ions; the nitrogen atom in ammonia is more electropositive than the carbon in hydrocarbon molecules and therefore promotes ammonium chloride production in preference to polychlorodioxins. Lastly, reactions with ammonia can change change their the fingerprint of precursor compounds and dioxins and so toxicity.

Ammonia can also neutralise acidic gases such as hydrogen chloride and sulphur dioxide. Ammonia and ammonia producing compounds are already used in industrial systems to convert oxides of nitrogen which are released as by-products, into nitrogen gas and water.

It is known from US-A-5,113,772 to use mixtures comprising alkanolamines and inorganic bases to inhibit the formation of dioxins on flyash produced during waste incineration. The inhibitor mixtures may be sprayed or spread onto to the municipal waste prior to combustion, or introduced to the gaseous products and flyash after the incineration step and before the precipitation of the flyash.

A method for reducing the hydrocarbon content of gases produced during the agglomeration of fine iron-containing particles by sintering them in the presence of carbonaceous material is disclosed by GB-A-2155457. In this method, a mixture of the fine iron-containing particles and carbonaceous materials is contacted with an effective amount of a hydrocarbon oxidation catalyst prior to heating in an oxygen-containing atmosphere. A similar method is disclosed in BE-A-10080097. Steel Times for June 1995 (page 220) reports that compared to waste incineration plants, exhaust gas flows for sinter plants are much higher resulting in high PCDD/F emission loads.

Although the concept of utilising ammonia to reduce toxicity in industrial emissions has been recognised, the preferred approach has been to introduce gaseous ammonia or aqueous ammonia spray into the waste gases of combustion.

However, the problems associated with waste incineration differ from that of sintering iron ores. In the process of waste disposal, large quantities of flyash are produced by incineration. Approximately 95-99% of the flyash is electrostatically precipitated and buried in landfills, leaving the remainder to be emitted from the incinerator stacks along with any gaseous toxic by-products. Advantageously, municipal waste may be sorted prior to incineration to select and remove those components which could create potentially harmful toxic by-products. In addition, waste remains loosely packed on incineration allowing enough air flow for the combustion process to proceed with ease.

In contrast, during the sintering of iron ore, enormous quantities of air are required to maintain combustion through the compact sinter bed; dampness at the base of the sinter bed also provides a barrier to the free flow of air which maintains combustion. Thus, very large volumes of fumes including toxic by-products are generated. Unfortunately, at this scale there are considerable Health and Safety practical problems with the use of gaseous ammonia, or the injection of ammonia liquor into the stacks of a sinter plant.

Ammonia is known to react with nitrogen oxides in the presence of conventional catalysts, such as platinum or oxides of vanadium, to produce nitrogen gas and water. BE-A-1008097 discloses a method for utilising ammonia to destroy nitrogen oxides in the waste gases arising from iron ore sintering. The method comprises introducing ammonia gas into waste sinter fumes, or depositing either ammonia or a substance which releases ammonia onto the surface of a bed of iron ore during the sintering process. However, instead of using conventional catalysts, the gases are recycled through a sinter bed zone where the temperature is less than 400°C and where the iron itself behaves as a catalyst. The quantity of ammonia added during the process is calculated as a function of the concentration of nitrogen oxides in the fumes, so that the molar ratio of ammonia:oxides of nitrogen is within the range 0.6-0.9.

It is an object of the present invention to provide an efficient and cost effective method of reducing toxic emissions, more especially dioxin formation, from a sinter strand, whilst keeping the quantity of ammonia gas released into the atmosphere at low levels and without the need to introduce complex modifications to existing strand equipment.

A method of sintering iron ore, comprising the sequential steps of producing a sinter feedstock by substantially homogeneously mixing *inter alia* iron ore with a solid compound which releases ammonia on thermal decomposition, depositing said feedstock onto a moving grate and combusting the same to produce sintered products rich in iron, characterised in that the ammonia releasing compound is urea (CO(NH₂)₂), the urea content of the feedstock mix being from 0.01 to 0.09% by weight.

Preferably, the ammonia releasing compound is between 0.02 to 0.04% by weight of the feedstock mix.

By maintaining the addition of ammonia releasing compound to these ranges, the required level of control over dioxin emissions is provided without over pollution of the exhaust gases with ammonia in gas or vapour form.

Ammonia releasing compounds may be mixed with the iron ore as a solid, for example in pellet form. It is preferable to mix the compounds in pelletised form with the other components of the feedstock.

It is preferred that the sinter strand includes a means for mixing quantities of urea pellets with iron ore fines, fluxes and particulate coke to produce the sinter feedstock.

In one embodiment of the invention, a quantity of iron ore fines is mixed within a blender with granules of ammonia bearing urea to achieve a substantially homogeneous blend of iron ore fines and the urea pellets. Quantities of particulate coke, fluxes and water are also blended with the fines and urea pellets. Typically the urea content is between 0.01 and 0.09% by weight of the sinter feedstock. A preferred urea range is from 0.02-0.04% by weight of the sinter feedstock.

After blending the mix is conveyed to a sinter strand and forms a layer or bed on a travelling grate of the strand. Initially the coke at the upper bed surface is ignited as the grate passes under burners and into the ignition hood of the strand. Thereafter combustion of the coke particles below the bed surface is maintained by air drawn through the layer bed. Heating the bed causes partial melting of the particulate content of the layer or bed to cause individual particles to be fused together. The combustion air leaves the strand through one or more stacks.

During the combustion process, ammonia is released from the urea pellets. The released ammonia suppresses the formation of chlorinated organics, reducing the concentration of dioxins in the waste gases. The ammonia also reacts with other by-products of the combustion process such as hydrogen chloride and sulphur dioxide and therefore reduces the level of acidic emissions in the waste gases. The effectiveness of the ammonia treatment is significantly enhanced by substantially homogeneously blending the solid ammonia containing pellets with the iron ore and other constituents of the sinter feedstock. It is believed that it is the gradual release of the ammonia throughout the combustion process that produces this significant reduction.

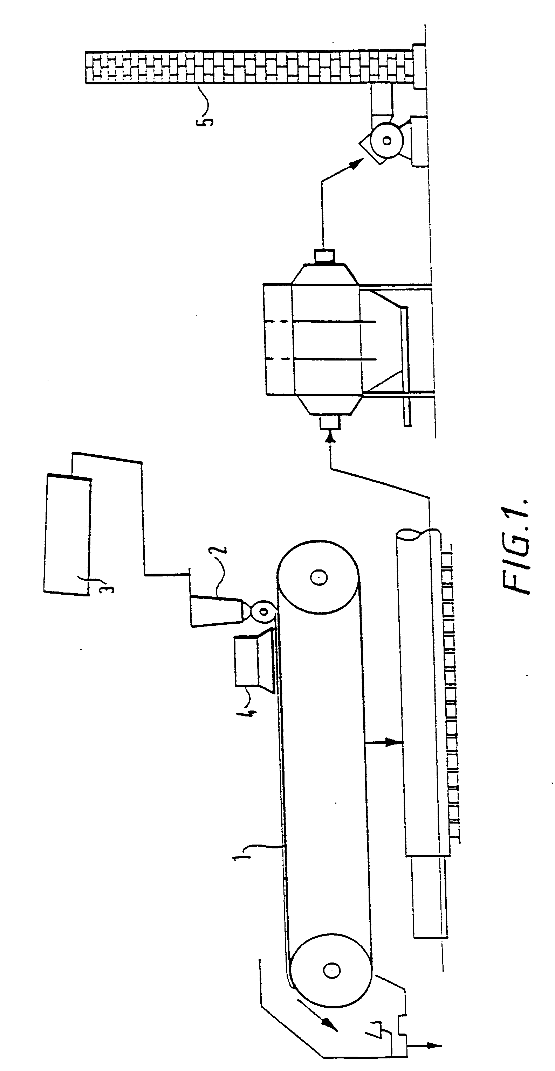

The invention will now be described by way of example only, with reference to Figure 1 of the accompanying diagrammatic drawing which discloses a sinter strand in accordance with the invention.

The strand comprises a travelling grate **1**, onto which pre-mixed constituents of a sinter bed are deposited via a hopper **2**. Mixing of these constituents is effected in a blender **3**. The mixed constituents include iron ore and iron ore fines, burnt lime, coke breeze and measured quantities of ammonia releasing compounds in solid, e.g. pellet form. The quantities of ammonia releasing compounds employed will be discussed below.

The deposited sinter bed feedstock passes below an ignition hood **4**, which ignites the coke breeze, combustion being enhanced and continued by the flow of large quantities of air through the bed. Sintered ore leaves the bed at the end of the grate remote from the hopper **2** and passes through a series of treatment stages. Waste gases of combustion leave the furnace through more stacks **5**.

The illustrated strand is typical of many conventional strands, the essential difference being the addition of ammonia releasing compounds to the sinter constituents within the blender **3**.

The invention will now be further described by way of example only, with reference to the following experiments and tables. It will be understood that these experiments by no means limit the scope of the invention.

A small hopper was constructed alongside other weighfeeders at the entrance to a sinter process, prior to the stage where the sinter ingredients are mixed. The hopper delivered solid urea material (urea prills) to the sinter feedstock at a preset rate before the components of the feedstock were blended in a mixing drum.

A metered quantity of urea was added for 3 hours; 1 hour for conditions to stabilise and 2 hours sampling time. Samples of gases were taken from the base of the main emissions stack, from the waste gas main before precipitation, and from dust collected from the precipitator.

Samples for analysis were procured under 4 sets of control conditions and 6 experiments where urea prills were added at a set rate per hour. Ammonia, hydrogen chloride, sulphur oxides and nitrogen oxides were also monitored from the main stack. The results are tabulated in Table 1 set out below.

**Table 1**

| UREA kg/hr | % by weight | PCDD/ F in main stack ng/m³ | PCDD/ F before ppt. ng/m³ | PCDD/ F ppt. Dust ng/m³ | HCI ppm | NH₃ ppm | CO₂ % |
|---|---|---|---|---|---|---|---|
| 0 | 0.000 | 1.54 | 1.8 | 42.8 | 2 | 0 | 2 |
| 0 | 0.000 | 1.23 | 1.03 | | 2 | 0 | 2 |
| 0 | 0.000 | 1.04 | 1.19 | | 2 | 0 | 2 |
| 0 | 0.000 | 1.09 | | | 2 | 0 | 2 |
| 25 | 0.010 | 1.18 | | 47.0 | 0 | 0 | 2 |
| 50 | 0.020 | 0.57 | 0.64 | | 0 | 10 | 2 |
| 117 | 0.046 | 0.58 | 0.59 | 50.4 | 0 | 35 | 2 |
| 170 | 0.068 | 0.69 | 0.74 | 64.6 | 0 | 60 | 2 |
| 210 | 0.084 | 0.78 | 0.70 | 42.8 | 0 | 65 | 2 |
| PCDD/F = polyclorodibenzo-dioxins/furans. | | | | | | | |
| I-TEQ = International Toxic Equivalent factor. | | | | | | | |

The TEQ is a way of expressing the toxicity of a complex mixture of different PCDD/F congeners in terms of an equivalent quantity of 2,3,7,8-tetrachlorodibenzo-p-dioxin (2,3,7,8-TCBD). Each of the 2,3,7,8 substituted congeners are assigned a toxicity equivalent factor (TEF) based on their toxicity relative to that of 2,3,7,8-TCBD which is universally assigned a TEF of one. Multiplying the concentration of PCDD/F by its TEF gives its concentration in terms of TEQ and the toxicity of a mixture is the sum of the TEQs calculated for all congeners.

The initial results which illustrate the levels of dioxin fumes, demonstrate a reduction from a mean of 1.22ng/m³ with nil urea addition, to 0.57ng/m³ at the urea addition rate of 50kg/hr. This corresponds to an addition of 0.02% urea by weight to the sinter feedstock. There is little further reduction in dioxin concentration at higher urea flowrates. Similarly, before the precipitator stage, the values follow the same pattern of approximately 50% reduction at all urea flow rates from 50 to 210kg/hr (0.020-0.084% by weight of the sinter feedstock). The dioxin concentration in the precipitator dust is reasonably constant.

Analysis of the solid samples of the raw mixture i.e. the sinter feedstock, show low dioxin levels. The finished sinter contains very little dioxins. The fingerprint of all the samples taken illustrated that the toxic chloro-organic dioxins accounted for less than 10% of the total mass concentration, and also less than 10% of the total I-TEQ (International Toxic Equivalent).

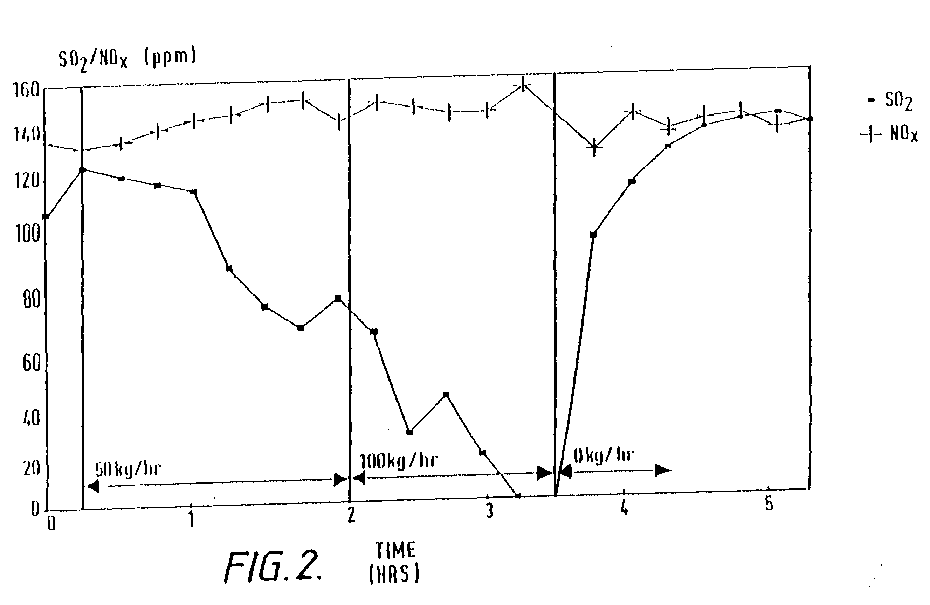

Figure 2 shows the concentrations of SO₂ ppm and NOₓ ppm against time, for a overall urea addition rate of 200 kg/hr, i.e 0.08% by weight. It is apparent that 30 minutes after urea addition is initiated, effects are observed at the stack. The SO₂ is reduced down to a non-detectable level and the NOₓ rises slightly by 15% during the time of excess ammonia in the stack.

Therefore, dioxin fume concentrations can be reduced by up to 50% by blending an optimal urea concentration of 0.02% by weight into the sinter feedstock prior to combustion.

It will be appreciated that the foregoing is merely exemplary of methods and apparatus in accordance with the invention and that various modifications can readily be made thereto without departing from the scope of the invention.

## Claims

1. A method of sintering iron ore, comprising the sequential steps of producing a sinter feedstock by substantially homogeneously mixing *inter alia* iron ore with a solid compound which releases ammonia on thermal decomposition, depositing said feedstock onto a moving grate and combusting the same to produce sintered products rich in iron, characterised in that the ammonia releasing compound is urea (CO(NH₂)₂), the urea content of the feedstock mix being from 0.01 to 0.09% by weight.

2. A method as claimed in claim 1, wherein the ammonia releasing compound is between 0.02 to 0.04% by weight of the feedstock mix.

3. A method as claimed in claim 1 or claim 2 wherein the ammonia releasing compound is in pellet form.

## Patentansprüche

1. Verfahren zum Sintern von Eisenerz mit den aufeinander folgenden Schritten der Erzeugung eines Sinter-Einsatzgutes durch im wesentlichen homogenes Mischen inter alia von Eisenerz mit einer festen Zusammensetzung, die unter thermischer Zersetzung Ammoniak freisetzt, Aufgabe des Einsatzgutes auf einen bewegten Rost und Brennen des Einsatzgutes zur Erzeugung eines eisenreichen Sinterproduktes, dadurch gekennzeichnet, daß die Ammoniak freisetzende Zusammensetzung Harnstoff (CO(NH₂)₂ ist und der Harnstoff in der Einsatzgut-Mischung einen Gehalt von 0,01 bis 0,09 Mass% aufweist.

2. Verfahren nach Anspruch 1, dadurch gekennzeichnet, daß die Ammoniak freisetzende Zusammensetzung zwischen 0,02 und 0,04 Mass% der Einsatzgut-Mischung bildet.

3. Verfahren nach Anspruch 1 oder 2, dadurch gekennzeichnet, daß die Ammoniak freisetzende Zusammensetzung in Form von Pellets vorliegt.

## Revendications

1. Un procédé de sintérisation d'un minerai de fer, comprenant les étapes séquentielles de produire une charge de départ pour la sintérisation en mélangeant de façon sensiblement homogène inter alia le minerai de fer avec un composé solide qui libère de l'ammoniac lors de la décomposition thermique, déposer cette charge de départ sur une grille roulante et provoquer la combustion de celle-ci pour produire des produits sintérisés riches en fer, caractérisé en ce que le composé libérant l'ammoniac est l'urée (CO(NH₂)₂), la teneur en urée du mélange de la charge de départ étant de 0,01 à 0,09% en poids.

2. Un procédé selon la revendication 1, où le composé libérant l'ammoniac constitue entre 0,02 à 0,04% en poids du mélange de la charge de départ.

3. Un procédé selon la revendication 1 ou la revendication 2, dans lequel le composé libérant l'ammoniac est sous forme de granules.
